# EUROPEAN PATENT APPLICATION

(11) **EP 3 343 472 A1**
(43) Date of publication of application: **04.07.2018**
(21) Application number: 17211170.0
(22) Date of filing: 29.12.2017
(51) Int. Cl.: G06Q 10/02

(54) **ELECTRIC VEHICLE CHARGING POINTS MOBILE APPLICATION**

(30) Priority: 30.12.2016 ES 201631736
(71) Applicant: Atos Worldgrid SL, 39011 S/N Santander (ES)
(72) Inventor: Guinea Díaz, Juan, 28037 Madrid (ES); Recio Calzada, Carlos, 39011 SANTANDER (ES); Gonzalez Hernando, Jorge, 28037 Madrid (ES); Guerrero Vega, Zorayda, 39011 S/N SANTANDER (ES); Andres Lopez, Luis Maximiliano, 28806 Madrid (ES); Gonzalez del Rio, Jose Alberto, 39003 Santander (ES); Cid Rodriguez, Silvia Maria, 28223 Pozuelo de Alarcon (ES); Garcia Pereda, Antonio Javier, 28033 Madrid (ES); Alonso Hernandez, David, 28037 Madrid (ES); Navarro Matesanz, Roberto, 28037 Madrid (ES); Güemes Seoane, Celestino, 39011 Santander (ES); Rodriguez Jacue, Miguel Angel, 39011 S/N SANTANDER (ES); De Manuel De Briz, David, 28012 Madrid (ES); Garcia-Arista Delgado, Pablo, 19200 Azuqueca de Henares (ES); Perales Gorostiaga, Juan, 39479 Viono de Pielagos (ES); Estevez Pena, Julio, BARCELONA (ES); Diaz Trobo, Enrique, 28042 Madrid (ES); Alberto Monferrer, Marta, 39011 S/N SANTANDER (ES); López Bellón, Ignacio, 39011 S/N SANTANDER (ES); Parrilla castaño, M. Fernando, 28037 Madrid (ES)
(74) Representative: Debay, Yves

(57) **Abstract**

A mobile application that can run on smartphone or other connected object providing similar functionalities to display information related to charging point of at least a network, said mobile application cooperating with mobile or connected object to establish a communication with at least a remote system for exchanging information with a database related to the charging points, of each network constituted to provide energy to electric vehicles, said application comprising at least a module «reservation» for handling the reservation process of a charging point by providing access to list of charging points equipped with a plurality of connectors each connector being adapted to a vehicle type and making said reservation.

## Description

### FILED OF INVENTION

The present invention relates to a mobile application for accessing a charging points service.

### BACKGROUND OF THE INVENTION

Early users of charge stations have often been frustrated by lack of availability. Since the range of many electric vehicles is limited, traveling to a remote charge station only to find it unavailable can be a serious problem if there is insufficient range available to travel to another charge station.

To solve this problem EP 2623364 teaches an electric vehicle charge station incorporating electric vehicle service equipment for connecting the vehicle to an electrical power source; one or more optical image sensors; a control processor; and a communications link for remote access and control.

According to this teaching when a user determines that charging is required, they will access a database in the charging network server through the internet and a mobile web browser or "app", either on a smartphone or built into the vehicle. A map display will allow the user to identify charging locations near their current location or near a planned destination. The user can then access the status information on the charger, and view recent images to verify that the charger is available, and not damaged or blocked by an unauthorized vehicle. At the option of the charging provider, various services may be provided, such as charger reservations and billing. However displaying camera pictures need a broad band width, consuming rapidly the subscription of the EV user. Even with a camera status information could not be accurate and between the time the booking was made and the arrival of the vehicle at the selected charging point, the status of said CP may change and an other vehicle could be present.

Moreover this service is concerning only a service network for a provider. With the development of electrical vehicle multiple service providers are offering charging services with charging point adapted to some specific particularities of several vehicles, such as the connectors and other charging points are just adapted for a specific vehicle. If each provider needs a camera the time for transmission of pictures could quickly increase with the number of service providers the user need to consult for finding a charging point within the remaining autonomy of the vehicle.

Moreover with the market growth each operator is adapting its offer to the new vehicles equipped with new connectors or requiring new functionalities. There is thus a need for universal services able to follow the new possibilities of the network and with a capacity to follow the offer of the market.

Some existing charge stations are parts of networks, whereby the station can be remotely monitored and controlled. Frequently the users can access maps or databases to identify nearby charge points, and in some cases determine whether the stations are available for use. WO 2014 062909 represent a such solution including one user interface for an application that can run on mobile smartphone or other device to provide preferences to the EVSE (Electric Vehicle Service Equipment) management system allowing the setting of charge requirements (e.g., as an amount of energy and/or as a range of travel for the particular vehicle) by a particular time, and a selection to accept additional charging (up to the battery's limit), while the price is not greater than a particular value. However in this embodiment, these preferences can be rendered as a code for entry into keypad connected to EVSE by pressing button, or in other embodiments, the preferences could be transmitted to server/database, rendered as a barcode readable by the EVSE management system, or sent to the EVSE management system wirelessly (e.g., via Bluetooth). Other functions offered by the user interface may include additional account management, information about the application or currently location and directions to a nearby EVSE.

The drawback of this bar code is the need that each station of the network should be able to decode this information.

This document teaches only a short range (Bluetooth) communication with EVSE.

On the contrary the application of the invention is able to communicate through the remote management system with any kind of protocol utilized by any operator

However during the time needed for the user vehicle to access the charging station, the availability of the charging point may change, even when the reservation was made.

Another difficulty is although the different operators usually review carefully the information about the charging points, and check at regular time interval the status of the charging points it might be interesting to obtain most quickly notification of problems or anomalous situation to the operator about the Charging point (CP).

### SUMMARY OF THE INVENTION

The present invention has as its object to obviate certain drawback of the prior art by offering a means for the efficient use and management of charging points infrastructure.

This goal is achieved by a mobile application that can run on smartphone or other connected object providing similar functionalities to display information related to charging point of at least a network, said mobile application cooperating with mobile or connected object to establish a communication with at least a remote system for exchanging information with a database related to the charging points, of each network constituted to provide energy to electric vehicles, said application comprising at least a module «reservation» for handling the reservation process of a charging point, said module «reservation» being characterized in that it provides access to list of charging points equipped with a plurality of connectors each connector being adapted to a vehicle type and making said reservation.

According to another feature, the functionalities of the module «reservation» comprise a crowdsourcing functionality enabling the mobile application when functionality is activated by the user to provide an interface to the user for preparing and sending notifications to the system managing charging points.

According to another feature, the mobile application comprises an Updating functionality of the Application Data on the mobile or connected object for providing the new and obsolete charging points, its positions and its connectors.

According to another feature, the «reservation» module cooperates with the smartphone to provide an arrangement for:
- logging with the system to associate with the logging information the information concerning an identification card used by user; or
- enabling the determination of settings of charge requirement;
- displaying and selecting a charging point in a displayed list or on a displayed map; or
- displaying and selecting a connector type adapted to the EV in case the charging Point particularities display provides different connectors possibilities listed in a display for selection; or
- selecting, after the date, the time range for the reservation, by using a selector of time for time range selection; or
- sending the information of the charging point identification, associated with the timeframe and the time range to the system which reply by indicating whether there are no validation problems associated with the request; and then
- receiving a confirmation message from the system confirming the reservation once the system has sent a locking order for the reservation timeframe and time range to the selected and identified charging point with the selected connector type, in association with a specific identification card of EV user, so that during the time frame and time range of the reservation only the EV user with the appropriate identification can unlock and use the charging point.

According to another feature, the functionalities of the module «reservation» comprise an arrangement to disable In the displayed calendar the days which have capacity reserve completed, to disable too the days preceding the day on which the query is made, and to limit the days subsequent to a limit of query of one month.

According to another feature, the functionalities of the module «crowdsourcing» comprise providing a couple of ways to notify error information of a charging point or notify a new charging point installed.

According to another feature, the mobile application provides two types of notifications:
a) Information about an existing charging point wherein notifications concerning a charging point on which the user communicates a failure, a change or an improvement, etc; can be prepared on the mobile sent to CPMS and then will be provided to the operator in order to fix the problem, if needed;
b) notification of a new charging point is activated when EV user is touching or selecting fifth icon (5).

According to another feature, the functionalities of the module «crowdsourcing» comprise:
- notification concerning the status of existing charging point, a user being able to find this feature in the screen of charging points detail;
- activation of a notification functionality of a new charging point when an EV user is touching or selecting fifth icon (5);
- notification of a new charging point, found by the user and which is not registered in the CPM system, said functionality being applied if CPMS shows external charging points from other operators, said notification comprising the fields:
   - description of charging point;
   - operator;
   - type of connector;
   - comments.

According to another feature, the functionalities of the, updating are using an update tool installed on the mobile and are of four different types:
- the operators and connectors are updated whenever CPM system generates a new update package. The application using the updates tool installed on the smartphone;
- the application is just installed and, the first time the application is run, the country is calculated from the coordinates of the mobile, and all local charging points and connectors for this country are downloaded and the operators and countries are downloaded too, these data being saved in local storage of the mobile;
- the user can select up to three countries as favorites, all charging points and connectors of a country being downloaded, when said country is selected;
- each time the application is started, and automatic updating is enabled, the application checks if it has been over fifteen days since the charging points and connectors have been updated, said application, in this case, accessing to the web service and looking if there are any new or changed data in order to download it.

According to another feature, the functionalities of the module «reservation» is providing access and control to the reserved charging point through an RFID card or similar before charging the vehicle.

According to another feature, the mobile application comprises «private functionalities» that are provided to those EV users having an agreement with an operator that use CPMS as charging point control system, said users providing, in this situation, credentials granting access to the private area with advanced functionalities, said area providing advanced functionalities such as the status of the charge, remotes operations or sessions history.

According to another feature, the module «reservation» is adapted to be stored in a smartphone or mobile object with touch display, controller and memory and comprising computer-executable instructions for the controller of the smartphone for supporting communications with a management system for a plurality of electric vehicle charging points, for supporting communication with the GPS navigation device installed on the mobile device to determine the position of the mobile and for supporting communication with a GIS to display the information about the CP installed around the position of the mobile shown on the display wherein the computer-executable instructions comprise computer code to: extract information from the management system about at least one characteristic of one or more of the plurality of the charging points.

According to another feature, the instructions to display the information are configured to display a summary of availability and the availability status of the one or more of the plurality of charging points.

According to another feature, the instructions to display the information are configured to create a scrollable display of objects, each object identifying location and status of the one or more of the plurality of charging points.

According to another feature, the module «reservation» comprises computer-executable instructions for selecting a charging point in a displayed list or on a displayed map.

According to another feature, the module «reservation» comprises computer-executable instructions for displaying and selecting a connector type adapted to the EV in case the charging point particularities display provides different connectors possibilities listed in a display for selection.

According to another feature, the module «reservation» comprises computer-executable instructions for selecting, after the date, the time range for the reservation, by using a selector of time for time range selection.

According to another feature, the module «reservation» comprises computer-executable instructions for sending the information of the charging point identification, associated with the timeframe and the time range to the system which reply by indicating whether there are no validation problems associated with the request.

According to another feature, the module «reservation» comprises computer-executable instructions for receiving a confirmation message, from the system, confirming the reservation once the system has sent a locking order for the reservation timeframe and time range to the selected and identified charging point with the selected connector type, in association with a specific identification card of EV user, so that during the time frame and time range of the reservation only the EV user with the appropriate identification can unlock and use the charging point.

According to another feature, the module «crowdsourcing» comprises computer-executable instructions for
- enabling creation of an information message about an existing charging point wherein said message is concerning a charging point on which the user communicates a failure, a change or an improvement, and sent to CPMS, or
- enabling notification of a new charging point which is activated when EV user is touching or selecting an icon on the display.

### BRIEF DESCRIPTION OF THE DRAWINGS

Other features and advantages of the present invention will appear more clearly upon reading the following description, given with reference to the appended drawings, in which:
- figure 1 is a schematic representation of the layers of the charging points management system according one embodiment;
- figure 2 represents a display of the mobile application on the mobile included a set of icons to execute some functionalities according one embodiment;
- figures 3a and 3b represent the displays in a GIS (geographic information system) of respectively the positions on a map of group of charging points that are available and the individual charging points that form part of this group, according one embodiment;
- figure 4 represent the display of a list of charging points ordered by distance according one embodiment;
- figure 5 represents a display of the manual searching of charging points according one embodiment;
- figures 6a and 6b represent the displays of respectively detailed information about charging points and a set of buttons to execute other functionalities relating to the charging points, according one embodiment;
- figures 7a and 7b represent the displays of respectively a road route from a current position to the locations of a selected charging point and the detailed route to reach said selected charging point according one embodiment;
- figures 8a and 8b represent the displays of respectively notifications on a charging point at which the user communicates a failure, a change or an improvement about the information stored on a charging points management system and notifications of new charging points found by the user and not registered in said management system according one embodiment;

### DETAILED DESCRIPTION

The present invention relates to a mobile application for accessing charging points infrastructure for electric vehicle and more precisely to a system for booking a charging point selected on several criteria in proximity or a given distance of the user.

In some embodiments, mobile application that can run on smartphone or other connected object providing similar functionalities to display information related to charging point (68) of at least a network, said mobile application cooperating with mobile or connected object to establish a communication with at least a remote system for exchanging information with a database related to the charging points (68), of each network constituted to provide energy to electric vehicles. In some embodiment, said application comprising at least a module «reservation» for handling the reservation process of a charging point (68), said module «reservation» being characterized in that it provides access to list of charging points (68) equipped with a plurality of connectors each connector being adapted to a vehicle type and making said reservation.

In the following description we will use the following acronyms with the corresponding meaning:
- Open Charge Point Protocol = OCPP
- Charging Point Management System= CPMS
- CPM = charging Point Manager
- Geographic information system = GIS
- Electric Vehicle User= EVu
- Charging Point = CP
- Electric Vehicle = EV

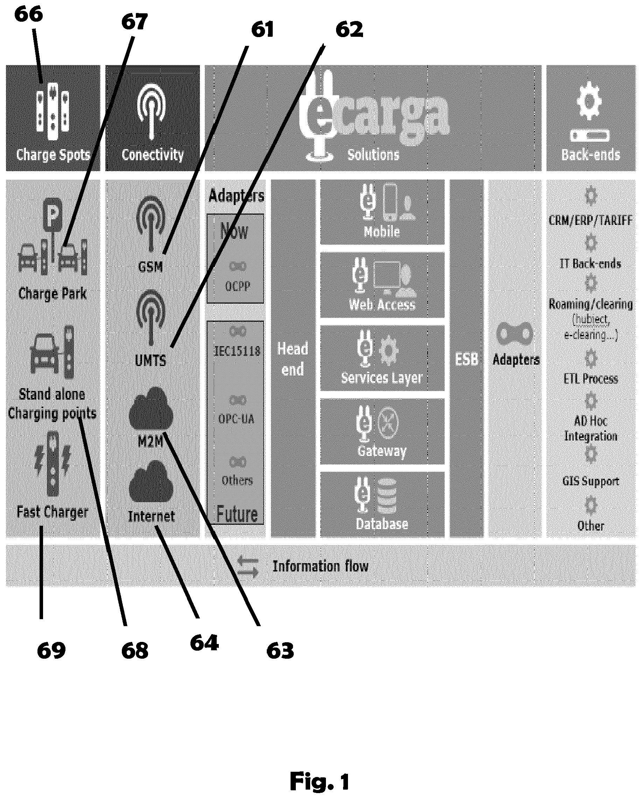

This section includes a description of a mobile application cooperating with a CP management system. This application is an external component of the system called CPMS, and it provides to the EV user information about charging points, transactions, etc. stored on CPMS. The CPMS as shown on fig.1 manages charge spots (66), which could be charge parks (67), or stand alone charging points (68) or fast chargers (69). Several charge spots could belong to the same or to different operators. The CP management system is able to communicate with the operator, with the charging spots and with the mobile of different users through either GSM connectivity (61) or UMTS connectivity (62) or M2M connectivity (63) or internet (64).

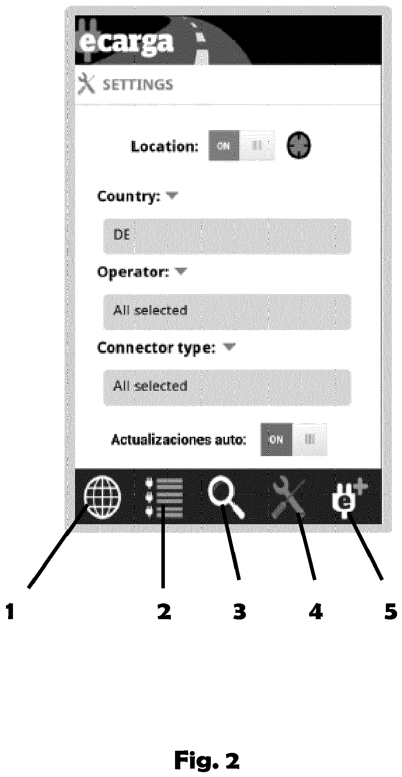

In the following fig. 2 to 8 the main features of the mobile application are shown.

The high level architecture of CPMS is able to integrate with different charging point vendors regardless of infrastructure and system while allowing the integration with third party systems to exchange information.

Further, as CPMS solution provides a service layer that offers information to the electric vehicle users through the web and a mobile application, the mobile application is able, for solving the needs of the end-user.

At the bottom of each display on the mobile are included a set of icons (1 to 5, fig.2) to execute other functionalities than the one displayed, when one of the icons is selected or touched.
Icon (1) relates to global positioning, displaying charge point routing to a charging point (68) selected.
Icon (2) provides the display under a list of characteristics or parameters or particularities of the item (CP, Route, notification of new CP, etc...) displayed on the screen before touching or selecting the icon.
Icon (3) provides a search functionality on an item.
Icon (4) enables user to edit a set of parameters.
Icon (5) enables EV user to transmit notifications.

Next the particularities of functions provided by each icon are explained.

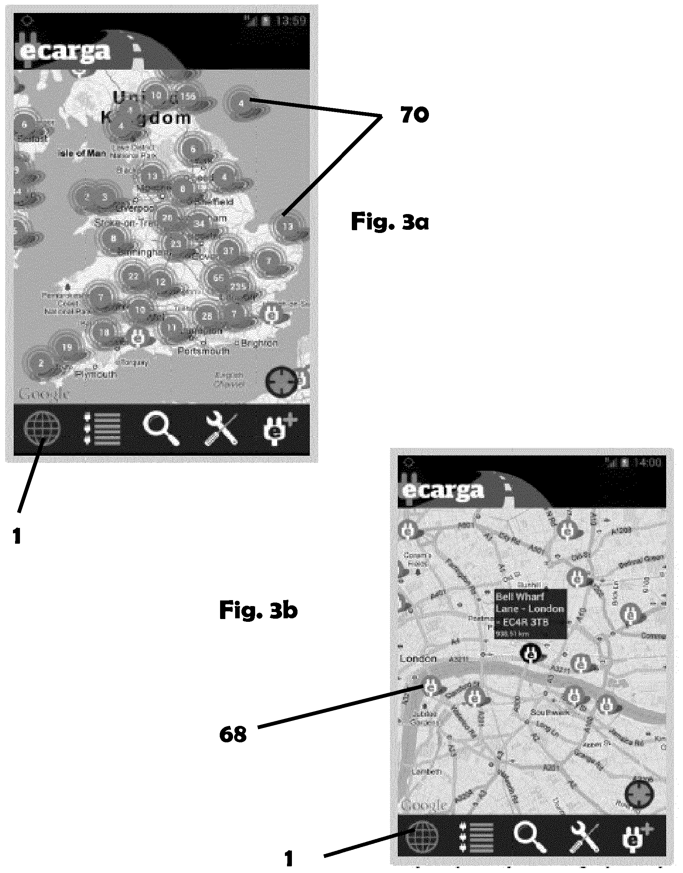

The first one (1) is launching the user positioning and global positioning functionality for displaying the positions on a map of charging points (68) that are available in a GIS (Geographic information system) map as shown on fig. 3a.

EV user by activating this functionality on the mobile, obtains that display shows a main page of GIS providing a map that shows, over a GIS environment. The GPS position of the mobile device is provided by the GPS device of the mobile to the display and superimposed on the map while the GPS position is sent to the management system of the networks to deliver information on the nearest points. The charging points representation (7, fig.3b) nearest to the GPS position, is superimposed on the page, said charging point information or graphic representation being sent by the management system through a communication link to the mobile. This GIS include a zoom function cooperating with the display of the mobile. If the view is zoomed out, the charging points are presented on the map in groups (70) as blue circles with a number as shown on figure 3a. This number represents the amount of points enclosed into this group. If we push on a group or touch the icon representing a circle, the map will zoom in showing all points within the group selected.

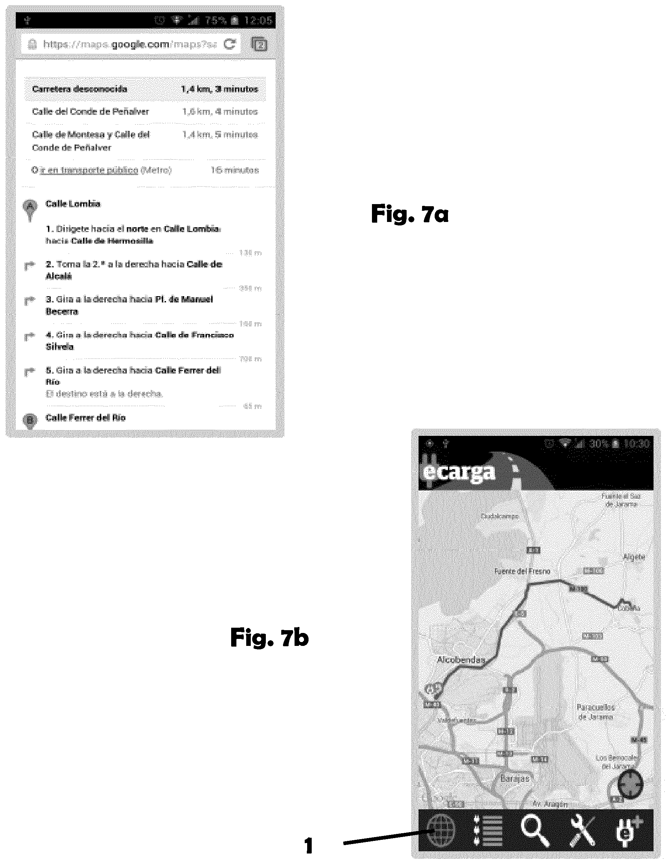

This first icon (1) is also providing a routing functionality. An EV user by activating this functionality on the mobile obtain help to find the road route from the current position to the locations of the selected charging point as shown on fig.7a. The system will connect to the GPS installed on the mobile device, to show the best route to the charging point (68) using the features offered by Google, it will draw the route in blue on the map. The routing functionality is provided, for example, through Google Maps API.

If a user needs more details about the route of the road, the application also displays the detailed route shown on fig.7b with explanation of each step, using the tools provided by Google.

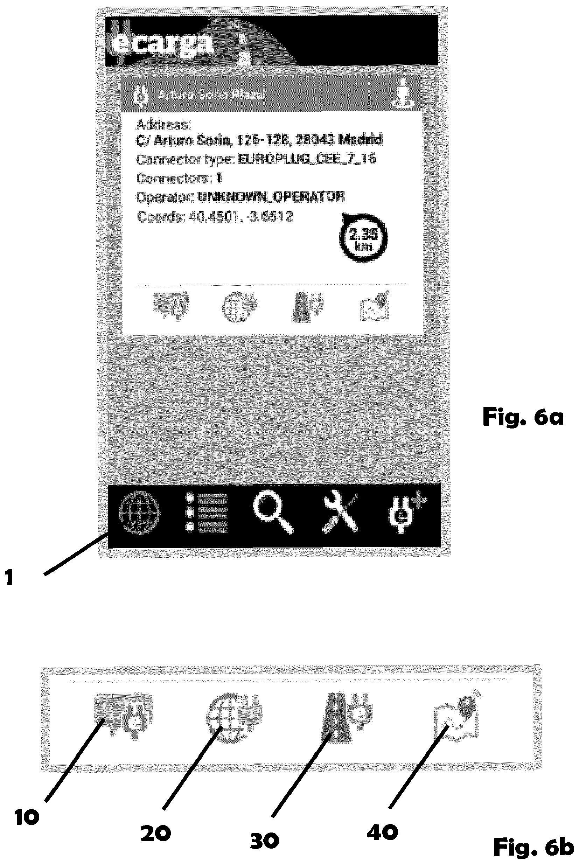

In some embodiments, the mobile application is able to provide two types of information to the user as shown on fig.2 and fig. 6a:
- the first is the information provided by the operator itself that has signed an agreement with management system provider, and shows complete and detailed information about the charging points installed and configured by this operator. In this case, the mobile Application after having displayed the information sent from the system will provide to the user advanced functionalities such as booking of a charging point (68), transaction detail, etc.
- the second shown on fig 6a is providing public information about other charging points (68) installed by other operators, Hotels, Shopping centers, etc. In this case the information is retrieved by the CPM system after each request of the mobile application and the CPM search for external systems and store in their localization in CPM system memory.

In some embodiments the functionalities of the module «reservation» is providing access and control to the reserved charging point (68) through an RFID card or similar before charging the vehicle. For example, and without limitation, if the reservation by means of the RFID (Radio-frequency identification) card is not available, a credit card can be used.

In some embodiments, the module «booking» comprises a crowdsourcing functionality. Although the operators usually review carefully the information about the charging points (68), the help from EV user is very important in order to notify problems or anomalous situation to the operator about the CP. The mobile application is able, when said crowdsourcing functionality is activated, to provide an interface to the user for preparing and sending notifications to the system managing CP.

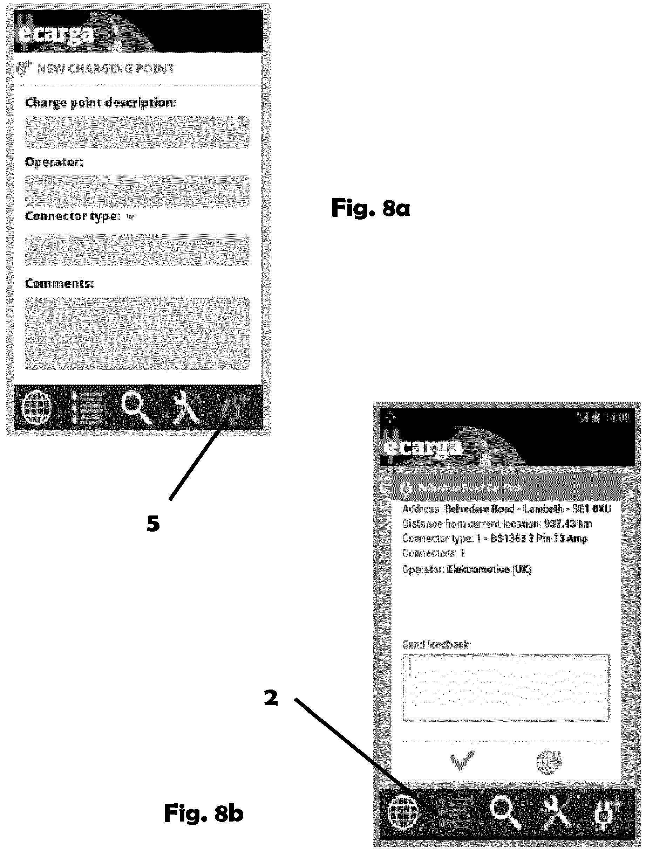

There are two types of notifications shown on fig.8a and 8b allowed by the mobile application. These notification displays appear when user selects icon (5) at the bottom of any display:
- Notifications fig.8a on a charging point (68) at which the user communicates a failure, a change or an improvement about the information stored on CPMS.
- Notifications shown on fig.8b of new charging points (68) found by the user and not registered in CPM system. This functionality applies and is activated only if the CPMS additionally to the charging points (68) provided by the operator, provides external charging points (68) not managed by its own operator.

In some embodiments the application will have a login system, in order to not show the user-specific information to other users. This system will contrast the access data introduced with the credentials stored in CPMS. The other part of information will be public.

The end user will be able to reserve through mobile application, a specific CP for a determined date and in a timeslot. The way that system CPM manages the reservation, allows that a CP can have several reservations, because among other features, the reservations are managed internally by the system CPM and not by the CP as defines OCPP.

For any type of search or routing associated with the user position, firstly it must be known where the user is located and where are the charging points (68) that the user is looking for. This functionality is used to define an exact or approximate GPS position to provide additional services to the user, such as, search for charging points (68) around the user, routing, etc.

The geo-positioning of the user is performed through a specific API (application programming interface) using the GPS (global positioning system) installed on the mobile and using the cell towers or the Wi-Fi connection to determine the position. This geo-positioning allows the application to show into a GIS environment the current position of the user.

Another functionality enables the user locating a different position to the current one of the user mobile application. This functionality also provides to the user the capability to navigate easily to other locations regardless of the current position by:
- using the map application. The EV user can slide the map, to the exact location on the map, showing the charging point that fits on the map.
- displaying the locations of the charging points (68) sought in a section "Search of charging points" functionalities.
   From any point on the map, the user will be able to return to his GIS location simply by clicking an appropriate icon on the map.

In the GIS, charging points near by cinemas, hotels, restaurant, shopping centers, fitness or sport centers, are distinguished from the others with a specific color so as to enables the user to select one of them and have an activity when his vehicle is charging.

Settings functionality is accessed by activating icon (4) of the bottom line and triggers the display shown on fig. 2.

The mobile application provides wide information of several countries, operators, etc.

To do this, the application defines and displays a set of parameters, which are editable by the user. Thus, the system will provide results that really fit the EV user's needs. Information provided by the GIS map or list will take into account these parameters.

The parameters are:
- Country: the countries where you want to search for charging points (68), by default only the country where the Application is downloaded is active.
- Operator: In case that mobile application provides information of other Operators, the system will provide information of them, in order to be selected.
- Type of connector, several connector types are available for EV (for example, Mennekes, CHA deMO or CSS: this functionality enables Multiple selection of connectors that can be found in any charging point (68), for example the Nissan Leaf is able to use Mennekes or CHAdeMO, but not CSS, for example.
- Automatic updates: mobile application is able to work in two ways (connected or disconnected), in case of connected behaviour, every time that the application is executed, it will request the newest information to CPMS. In case of disconnected behaviour, the application uses the information stored by default in the system.

According to fig.2 the user is able to select on the display one of the parameter (country, operator, connector type) to enable through the application the display of a scroll menu in which he could select one of the corresponding selectable value of the parameter. When selecting Operator the corresponding values could be: all, OP1, OP2 ... When selecting connector type the user may choice between the following types: all, Mennekes, CHAdeMO, CSS, others...

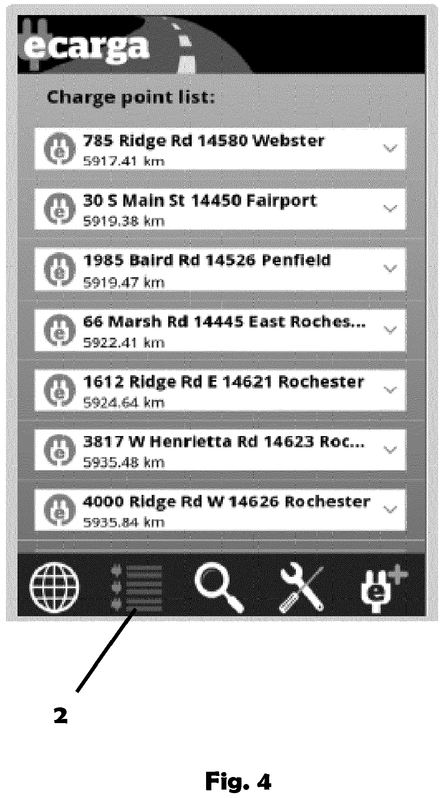

The main point that the application must cover is to provide to the final user information about the charging infrastructure installed on field. This information can be provided in two ways, as a GIS map, or as a List ordered by distance shown on fig. 4.

This GIS environment will be the more useful perspective in the application, because it will show the information about the CP installed around the position shown in the application screen.

If any charging point (68) is selected the application shows a pop-up with a short summary, the Address, City and the distance from the current position of the user. A tap in this pop-up will redirect the user to the detailed information about the charging point (68).

When the user zooms out on the map, the locations of the charging points are aggregated into a new point in the map. Each point (70, fig.3a) includes a number, which represents the number of charging points (68) aggregated.

If the user selects or presses over one of these groups, the application zooms in, to show (fig. 3b) the individual charging points (68) that form part of this group.

Display of the List functionality is launched when activating icon (4) during the execution of another functionality such as obtaining or determining the closest CP.

Another useful perspective is the CPs list, which provides the address and the distance to each CP. The user can find more information about these charging points (68) by tapping on them.

Search functionality is activated when touching or selecting third icon (3).

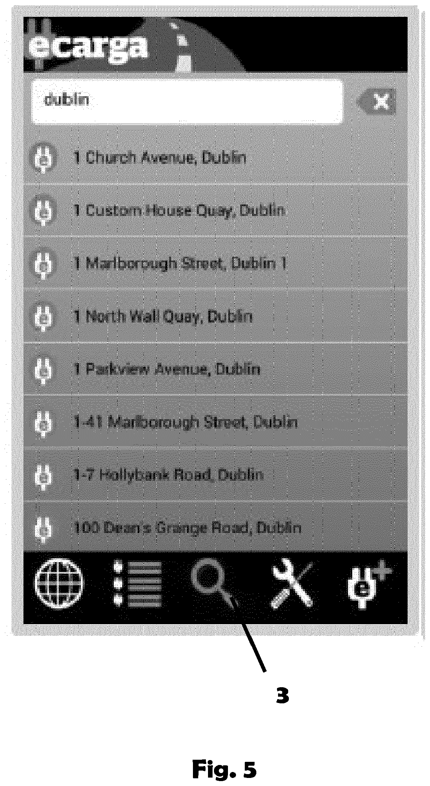

In some embodiments, a functionality of searching charging points can be selected by touching icon (3) and the display shown on fig. 5 appears on the screen of the mobile for manual search of charging points (68). This functionality provides a free text field (51), where the user can introduce part of the charging point address or description. The search lists all charging points (68) matching the provided address or description. From this list the user can perform the following actions:
- Tapping in any row, the system shows the "charging point information" with the CP detail.
- The overall list of charging points can be geopositioned by tapping on the globe icon. In this case the GIS map will only show those CPs that fit with the search criteria provided. Additionally, only those charging points that meet the setting parameters (country, operator and connector type) will be shown in the list and on the map.

The application displays detailed information about charging points shown on fig.6a. The data provided is the following:
- general identifier of the charging point (short description).
- location, the following data concatenated and separated by spaces:
   - Type of Address
   - Address
   - Number
   - Rest of Address
   - Zip Code
   - City
   - Number of connectors.
   - Type of connectors.
   - Operator.
   - GPS coordinates.
   - Distance from charging point to the user's location.

In the bottom of this displayed information shown on fig.6a are included a set of buttons or icons shown fig.6b to execute other functionalities
- The first one (10) provides the capability to send messages about the charging point situation, such as any problem in the CP, broken parts, etc. this belongs to crowdsourcing capability.
- The second one (20) shows the charging point in the GIS environment.
- The third one, (30) shows the route within mobile application, from the current position to the charging point, this is explained later.
- Finally, the last button (40) provides the option to open an external application in order to navigate to the charging point, such us Google maps.

The application also provides a routing process option. By using this process by selecting third button (30), the user can see the route from its current position to the selected charging point (68). Each time the application returns the information of a charging point also offers the possibility of indicating the route from the user's location to the charging point (68) chosen. If you choose this option, the system will connect to the GPS navigation device installed on the mobile device, to show the best route to that charging point using the features offered by Google.

The application has two ways of routing that appear differentiated by two icons on the bottom of the detail screen of the charging point:
- It displays fig.7a the route printed in the map from the user's location to the charging point chosen.
- It explains fig.7b step by step how to arrive from the location of the user to the charging point chosen.

Another important point to take into account is the crowdsourcing; this means that although the system tries to review carefully the information, the help from EV user is really important for notify errors about the current CP information.

For that reason the system will provide a couple of ways to notify error information of a CP or notify a new CP installed.

There are two types of notifications:
- notifications concerning a charging point (68) on which the user communicates a failure, a change or an improvement, etc. This information will be provided to the operator in order to fix the problem, if apply. A user can find this feature in the screen of charging points detail;
- notification functionality of a new charging point is activated when EV user is touching or selecting fifth icon (5). This notification of a new charging point concerns a charging point, found by the user and, which is not registered in the CPM system. This functionality applies if CPMS shows external charging points from other operators. The fields of this notification are:
   - description of charging point;
   - operator;
   - type of connector;
   - comments;

In some embodiments, comprises an updating functionality of the application data on the mobile or connected object. The application needs to be updated periodically for showing always the most recent data: the new and obsolete charging points, its positions and its connectors. And it updates operators too.

There are different types of updates:
- The operators and connectors are updated whenever ecarga system generates a new update package. The application uses the updates tool installed on the smartphone. For example, CPM system being able to generate a new updates through Google play OTA mechanism.
- The application is just installed. The first time you run the application, the country is calculated from the coordinates of the mobile, and all local charging points (68) and connectors for this country are downloaded. This first time, the operators and countries are downloaded too. These data are saved in local storage. For example, said data being saved in local database of the CPMS system.
- The user can select up to three countries as favorites. When said user selects a country, all charging points (68) and connectors of this country are downloaded.
- Each time the application is started, and automatic updating is enabled, the application checks if it has been over fifteen days since the charging points (68) and connectors have been updated, in this case, the application access to the web service and looks if there are any new or changed data in order to download it.

In some embodiments, the application comprises «private functionalities». These «private functionalities» are provided to those EV users that have an agreement with an operator that use CPMS as charging point control system. In this situation, the user will provide credentials, granting access to the private area with advanced functionalities.

This area is where new functionalities, such as the status of the charge, remotes operations, sessions history, etc. will be provided.

The application provides a login screen, accessible from several screens that allow you to reach the private area of the application by entering a username and password.

If the login data are correct the user will enter in private part of the application, if these are not correct, a message will appear in the same screen, informing the user that the credentials are not correct and the user will not have access to the private area.

Once the user has access to the private area, the functionalities such as the status of the charge, remotes operations, sessions or history. are provided

In some embodiments the module reservation is adapted to be stored in a smartphone or mobile object with touch display, controller and memory and comprising computer-executable instructions for the controller of the smartphone for supporting communications with a management system for a plurality of electric vehicle charging points, for supporting communication with the GPS navigation device installed on the mobile device to determine the position of the mobile and for supporting communication with a GIS to display the information about the CP installed around the position of the mobile shown on the display wherein the computer-executable instructions comprise computer code to: extract information from the management system about at least one characteristic of one or more of the plurality of the charging points.

Instructions to display the information are configured to display a summary of availability and the availability status of the one or more of the plurality of charging points. Said instructions to display the information are further configured to create a scrollable display of objects, each object identifying location and status of the one or more of the plurality of charging points.

In some embodiments, the module «reservation» cooperates with the smartphone, by means of the computer-executable instructions, to provide an arrangement for:
- logging with the system to associate with the logging information the information concerning an identification card used by user; or
- enabling the determination of settings of charge requirement; or
- displaying and selecting a charging point (68) in a displayed list or on a displayed map; or
- displaying and selecting a connector type adapted to the EV in case the charging point (68) particularities display provides different connectors possibilities listed in a display for selection; or
- selecting, after the date, the time range for the reservation, by using a selector of time for time range selection; or
- sending the information of the charging point (68) identification, associated with the timeframe and the time range to the system which reply by indicating whether there are no validation problems associated with the request; and then
- receiving a confirmation message, from the system, confirming the reservation once the system has sent a locking order for the reservation timeframe and time range to the selected and identified charging point (68) with the selected connector type, in association with a specific identification card of EV user, so that during the time frame and time range of the reservation only the EV user with the appropriate identification can unlock and use the charging point.

In some embodiments, the module «crowdsourcing » comprises computer-executable instructions for:
- enabling creation of an information message about an existing charging point (68) wherein said message is concerning a charging point (68) on which the user communicates a failure, a change or an improvement, and sent to CPMS, or
- enabling notification of a new charging point (68) which is activated when EV user is touching or selecting an icon (5) on the display.

Through the mobile application the user can make the process of booking on charging points (68), marked with the capacity to be reserved, to do this on the map where are shown charging points (68) on which one can perform the reserve process.

It is important to note that in order to make the booking process the user will be logged into the application.

On the detail of charging point the user can start the booking process, selecting the connector type in case the charging point (68) has different connectors.

In some embodiments, the system has a calendar and selector of time through which the user can complete the reservation request by means of the module «reservation». The system will indicate where bookings are already made.

In the calendar should be disabled the days which have capacity reserve completed. The days preceding the day on which the query is made appear always disabled, and the days subsequent have a limit of query of a month.

After selecting the date the user must select the time range for the reservation, as per the following image.

If there are no validation problems associated with the request the system will respond with the approval of the application and will redirect to the screen where the reservations held by the user are listed.

The user can query on reservations associated with a point and the reservations they have made.

Access to this functionality is in the sidebar and can be accessed only if the user is logged in. If not, the functionality appears in the menu but is disabled.

The fields in the detail of each of the reservations are:
- location;
- date and time range for the reservation;
- reservation status.

In addition to the fields above each of the reservations have controls to edit or cancel a booking.

On this screen, changes can be made to the reservation. Once the modification is done, the information will be sent to back-end systems via a service that updates the information.

In the case of user cancelling the booking, the application will ask to confirm that the user intends to cancel the reservation. If so it will proceed to send the cancellation to the reservation system while in the list the reservation is changed to cancel.

An option "Reservations associated to a charging point" shows the same screen as described in the section "Search charging points". It will have a search engine on top of the screen to filter the query.

Beside each of the charging points (68) listed, a control appears that allows access to the reservations.

Tapping on a reservation, a screen appears that shows the reservations associated by charging point, with characteristics similar to those indicated above for detail of recharges made by the user.

There are two REST services provided by CPMS in order to integrate with mobile application and shows the information to the EV users:
- the service ChargePointMobileServiceSE, which accesses the charging points and connector information with the following operations:
   ↕ findAIIConnector: search for connectors. A user can filter last change date.
   ↕ findByld: meethod to get the full detail of a charging point (including its connector) using an ID.
   ↕ findChargePoint: search for charging points. A user can filter by last change date, address, coordinates, country, or operator;
- the service MasterTablesMobileServiceSE, which accesses the list of the different master tables. All operations include filters. The following operations apply:
   ↕ findAIIConnectorType: Search for all type of connectors;
   ↕ findAllOperator: Search for all operators;
   ↕ findAllSource: Search for all sources.

By REST (representational state transfert) we mean a computer architectural style that specifies constraints, such as the uniform interface, that if applied to a web service induce desirable properties, such as performance, scalability, and modifiability, that enable services to work best on the web.
- The mobile application also provides, for example, the following set of features:interoperability: the application uses standard communication protocols at its interfaces (publishes the information needed through REST web services). Thus, it boosts interoperability at all levels.
- security at different levels due to data sensitivity, there will be public data (data displayed by the Application currently) and private data that requires authentication.
- Multilanguage to ensure the solution can be adapted to any language, at different levels, like front-ends or the message sent to the end-user in the charge point.
- mobile application can works as an integration platform or gateway to communicate the end user with any charging infrastructure installed.
- Graphic and rich customer interfaces. The solution provides a visual system, GIS, which allows seeing at a glance on screen all the charging points' information in real-time avoiding tedious and complex data searches.

The present application describes various technical features and advantages with reference to the figures and/or various embodiments. Those skilled in the art will understand that the technical features of a given embodiment can in fact be combined with features of another embodiment unless explicitly stated otherwise, or unless the combination does not provide a solution to at least one of the technical problems mentioned in the present application. In addition, the technical features described in a given embodiment can be isolated from the other technical features of this embodiment unless explicitly stated otherwise.

It must be obvious to those skilled in the art that the present invention allows embodiments in many specific forms without departing from the field of application of the invention as claimed. Consequently, the present embodiments must be considered as illustrations, but can be modified in the area defined by the scope of the appended claims, and the invention must not be limited to the details given above.

## Claims

1. A mobile application that can run on smartphone or other connected object providing similar functionalities to display information related to charging point (68) of at least a network, said mobile application cooperating with mobile or connected object to establish a communication with at least a remote system for exchanging information with a database related to the charging points (68), of each network constituted to provide energy to electric vehicles, said application comprising at least a module «reservation» for handling the reservation process of a charging point (68), said module «reservation» being **characterized in that** it provides access to a list of charging points (68) equipped with a plurality of connectors each connector being adapted to a vehicle type and making said reservation.

2. A mobile application according to claim 1, **characterized in that** the functionalities of the module «reservation» comprise a crowdsourcing functionality enabling the mobile application, when functionality is activated by the user, to provide an interface to the user for preparing and sending notifications to the system managing charging points (68).

3. A mobile application according to claims 1, **characterized in that** it comprises an updating functionality of the application data on the mobile or connected object for providing the new and obsolete charging points (68), its positions and its connectors.

4. A mobile application according to claim 1, **characterized in that** the module «reservation» cooperates with the smartphone to provide an arrangement for:
• logging with the system to associate with the logging information the information concerning an identification card used by user; or
• enabling the determination of settings of charge requirement; or
• displaying and selecting a charging point (68) in a displayed list or on a displayed map; or
• displaying and selecting a connector type adapted to the EV in case the charging point (68) particularities display provides different connectors possibilities listed in a display for selection; or
• selecting, after the date, the time range for the reservation, by using a selector of time for time range selection; or
• sending the information of the charging point (68) identification, associated with the timeframe and the time range to the system which reply by indicating whether there are no validation problems associated with the request; and then
• receiving a confirmation message, from the system, confirming the reservation once the system has sent a locking order for the reservation timeframe and time range to the selected and identified charging point (68) with the selected connector type, in association with a specific identification card of EV user, so that during the time frame and time range of the reservation only the EV user with the appropriate identification can unlock and use the charging point (68).

5. A mobile application according to claims 4, **characterized in that** the functionalities of the module «reservation» comprise an arrangement to disable in the displayed calendar the days which have capacity reserve completed, to disable too the days preceding the day on which the query is made, and to limit the days subsequent to a limit of query of one month.

6. A mobile application according to claims 2, **characterized in that** the functionalities of the module «crowdsourcing » comprise providing a couple of ways to notify error information of a charging point (68) or notify a new charging point (68) installed.

7. A mobile application according to claim 6, **characterized in that** there are two types of notifications:
a) information about an existing charging point (68) wherein notifications concerning a charging point (68) on which the user communicates a failure, a change or an improvement, etc; can be prepared on the mobile sent to CPMS and then will be provided to the operator in order to fix the problem, if needed;
b) notification of a new charging point (68) is activated when EV user is touching or selecting fifth icon (5).

8. A system according to one of claims 2, 5 or 6, **characterized in that** the functionalities of the module «crowdsourcing» comprise:
• notification concerning the status of existing charging point (68), a user being able to find this feature in the screen of charging points detail;
• activation of a notification functionality of a new charging point (68) when an EV user is touching or selecting fifth icon (5);
□ notification of a new charging point (68), found by the user and which is not registered in the CPM system, said functionality being applied if CPMS shows external charging points (68) from other operators, said notification comprising the fields:
- description of charging point (68);
- operator;
- type of connector;
- comments.

9. A system according to claim 3, **characterized in that** the functionalities of updating are using an update tool installed on the mobile and are of four different types:
• the operators and connectors are updated whenever CPM system generates a new update package, the application using the updates tool installed on the smartphone;
• the application is just installed and, the first time the application is run, the country is calculated from the coordinates of the mobile, and all local charging points (68) and connectors for this country are downloaded and the operators and countries are downloaded too, these data being saved in local storage of the mobile;
• the user can select up to three countries as favourites, all charging points (68) and connectors of a country being downloaded, when said country is selected;
• each time the application is started, and automatic updating is enabled, the application checks if it has been over fifteen days since the charging points (68) and connectors have been updated, said application, in this case, accessing to the web service and looking if there are any new or changed data in order to download it.

10. A mobile application according to claim 1, **characterized in that** the functionalities of the module «reservation» is providing access and control to the reserved charging point (68) through an RFID card or similar before charging the vehicle.

11. A mobile application according to one of claims 1 to 10, **characterized in that** it comprises «private functionalities» that are provided to those EV users having an agreement with an operator that use CPMS as charging point (68) control system, said users providing, in this situation, credentials granting access to the private area with advanced functionalities, said area providing advanced functionalities such as the status of the charge, remotes operations or sessions history.

12. A module reservation according to claim 1, adapted to be stored in a smartphone or mobile object with touch display, controller and memory and comprising computer-executable instructions for the controller of the smartphone for supporting communications with a management system for a plurality of electric vehicle charging points, for supporting communication with the GPS navigation device installed on the mobile device to determine the position of the mobile and for supporting communication with a GIS to display the information about the CP installed around the position of the mobile shown on the display wherein the computer-executable instructions comprise computer code to: extract information from the management system about at least one characteristic of one or more of the plurality of the charging points.

13. A module reservation according to claim 12, wherein the instructions to display the information are configured to display a summary of availability and the availability status of the one or more of the plurality of Charging Points.

14. A module reservation, according to claim 12, wherein the instructions to display the information are configured to create a scrollable display of objects, each object identifying location and status of the one or more of the plurality of charging points.

15. A module reservation, according to claim 12, comprising computer-executable instructions for selecting a charging point (68) in a displayed list or on a displayed map.

16. A module reservation, according to claim 12, comprising computer-executable instructions for displaying and selecting a connector type adapted to the EV in case the charging point (68) particularities display provides different connectors possibilities listed in a display for selection.

17. A module reservation, according to claim 12, comprising computer-executable instructions for selecting, after the date, the time range for the reservation, by using a selector of time for time range selection.

18. A module reservation, according to claim 12, comprising computer-executable instructions for sending the information of the charging point (68) identification, associated with the timeframe and the time range to the system which reply by indicating whether there are no validation problems associated with the request.

19. A module reservation, according to claim 12, comprising computer-executable instructions for receiving a confirmation message, from the system, confirming the reservation once the system has sent a locking order for the reservation timeframe and time range to the selected and identified charging point (68) with the selected connector type, in association with a specific identification card of EV user, so that during the time frame and time range of the reservation only the EV user with the appropriate identification can unlock and use the charging point (68).

20. A module «crowdsourcing » according to claim 6, comprising computer-executable instructions for
- enabling creation of an information message about an existing charging point (68) wherein said message is concerning a charging point (68) on which the user communicates a failure, a change or an improvement, and sent to CPMS, or
- enabling notification of a new charging point (68) which is activated when EV user is touching or selecting an icon (5) on the display.
